# EUROPEAN PATENT APPLICATION

(11) **EP 2 104 106 A1**
(43) Date of publication of application: **23.09.2009**
(21) Application number: 09001370.7
(22) Date of filing: 02.02.2009
(51) Int. Cl.: G11B 27/034, H04N 7/26

(54) **Video contents editing apparatus, controller and method**

(30) Priority: 17.03.2008 JP 2008068299; 23.01.2009 JP 2009013530
(71) Applicant: Kabushiki Kaisha Toshiba, Minato-ku, Tokyo 105-8001 (JP)
(72) Inventor: Uchida, Tomoyuki, Tokyo 105-8001 (JP)
(74) Representative: HOFFMANN EITLE

(57) **Abstract**

A video contents editing apparatus (1) for editing video contents at an editing point on an arbitrary time, the video contents being inter-frame coded in units of GOP (Group of Pictures), includes a decoder (11) to decode a GOP including the editing point into reproduction data, an encoder (12) to encode the reproduction data into intra coding data, and controller (30) to generate editing information including information indicating the intra coding data and the editing point and to manage the intra coding data and the editing information by associating them with the video contents.

## Description

The present invention is related to an apparatus, a controller and method for editing video contents which are in, such as, MPEG-2 format, used in digital broadcasting systems etc.

Conventionally, contents recorded in long-GOP (Group of Pictures) of an MPEG-2 format and the like were not able to be reproduced simply from an arbitrary frame, due to correlations between frames before and after. In other words, since it was necessary to perform decode processing in units of GOP, the video contents editing apparatus performed decoding from the head of the GOP which included a frame to start reproducing, and outputted the decoded baseband image outside the assigned frame.

Further, in a case of reproducing two contents consecutively, since it was necessary to simultaneously decode an end GOP of the contents which is being reproduced and a head GOP of the contents for starting reproduction subsequently, decoding was unable to be performed by a single decoder. Therefore, in order to enable smooth reproduction of two consecutive contents, two decoders were used alternately so as to carry out overlap reproduction between the reproduction of the end GOP and the reproduction of the head GOP, and the decoded baseband images were switched at the assigned frame by using a selector. However, since two decoders were necessary to enable consecutive reproduction, there were down sides such that circuit sizes increased and production costs could not be reduced.

Further, in a case of unifying the two contents recorded in long-GOP by performing A/B insert editing which connects contents at an arbitrary frame, since the long-GOP contents could not be edited directly at an arbitrary frame, a method to reproduce of the contents separately by using two reproduction apparatuses and record them as single unified contents in the external recording apparatus was mostly used. Therefore, since two reproduction apparatuses and one recording apparatus were necessary for A/B insert editing, the system became larger and the facility construction cost also tended to increase.

Further, in a case of file transferring contents recorded in long-GOP after assigning an IN point and an OUT point at arbitrary frames, a method to send original contents with editing information (EDL: Edit Decision List) assigning the IN point and the OUT point, or copy the file temporary as a different file and send the copied file with an EDL assigning the IN point and the OUT point was taken. Therefore, in some cases, file transfer required many hours.

As a publicly-known document related to the present invention, there are, for example, Jpn. Pat. Appln. KOKAI Publication No. 2002-300528 and Jpn. Pat. Appln. KOKAI Publication No. 2002-281433.

As mentioned above, since contents recorded in long-GOP could not simply be reproduced from an arbitrary frame, there were various negative effects on the editing work.

The present invention focuses on the above mentioned matters and intends to provide a video contents editing apparatus, a controller and method which enable efficient editing at an arbitrary frame by a simple configuration.

According to an aspect of the present invention, there is provided a video contents editing apparatus for editing video contents at an editing point on an arbitrary time, the video contents being inter-frame coded in units of GOP (Group of Pictures), comprising: a decoder to decode a GOP including the editing point into reproduction data; an encoder to encode the reproduction data into intra coding data; a generation module to generate editing information including information indicating the intra coding data and the editing point; and a management module to manage the intra coding data and the editing information by associating them with the video contents.

According to another aspect of the present invention, there is provided a controller operating in an apparatus for editing video contents at an editing point on an arbitrary time, the video contents being inter-frame coded in units of GOP (Group of Pictures), performing actions of: decoding a GOP including the editing point into reproduction data by a decoder; encoding the reproduction data into intra coding data by an encoder; generating editing information including information indicating the intra coding data and the editing point; and managing the intra coding data and the editing information by associating them with the video contents.

According to yet another aspect of the present invention, there is provided a method used in an apparatus for editing video contents at an editing point on an arbitrary time, the video contents being inter-frame coded in units of GOP (Group of Pictures), comprising: decoding a GOP including the editing point into reproduction data; encoding the reproduction data into intra coding data; generating editing information including information indicating the intra coding data and the editing point; and managing the intra coding data and the editing information by associating them with the video contents.

The invention can be more fully understood from the following detailed description when taken in conjunction with the accompanying drawings, in which:
FIG. 1 is a block diagram showing a configuration of a video contents editing apparatus according to an embodiment of the present invention.
FIG. 2 is a flow chart showing procedures carried out by a controller shown in FIG. 1.
FIG. 3 is a diagram showing the operation of the apparatus shown in FIG. 1.

An embodiment of the present invention will be explained in detail with reference to the drawings, as follows.

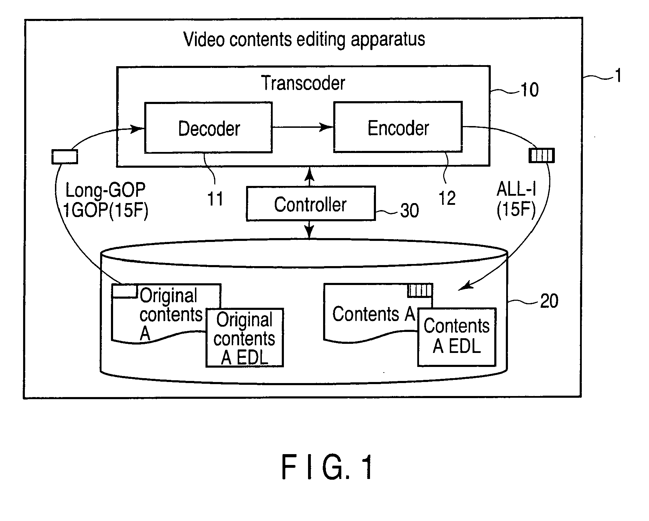

FIG. 1 is a block diagram which shows a configuration of a video contents editing apparatus according to an embodiment of the present invention. The video contents editing apparatus 1 comprises a transcoder 10, a storage unit 20 and a controller 30 which controls these. The storage unit 20 is comprised of a memory, such as RAM and a hard disk. The storage unit 20 stores original contents of editing targets together with editing information (EDL: Edit Decision List) of the original contents. The original contents are video images which are inter-frame coded in units of GOP (Group of Pictures). Here, the original contents are long-GOP data in MPEG-2 format. EDL is a description of editing procedures using time code, in which data, such as an IN point and an OUT point of each cut, split data and effect control timing, are described.

The transcoder 10 comprises a decoder 11 and an encoder 12. The transcoder 10 decodes the original contents read out from the storage unit 20 into reproduction data by the decoder 11, in accordance with the control by the controller 30. Further, the reproduction data output from the decoder 11 is intra-frame coded by the encoder 12 to encode all frames into I frames. In this manner, the long-GOP data is converted into All-Intra (I frame-only) data via the transcoder 10. The controller 30 has an EDL generation module and a contents management module in addition to the control of the transcoder 10.

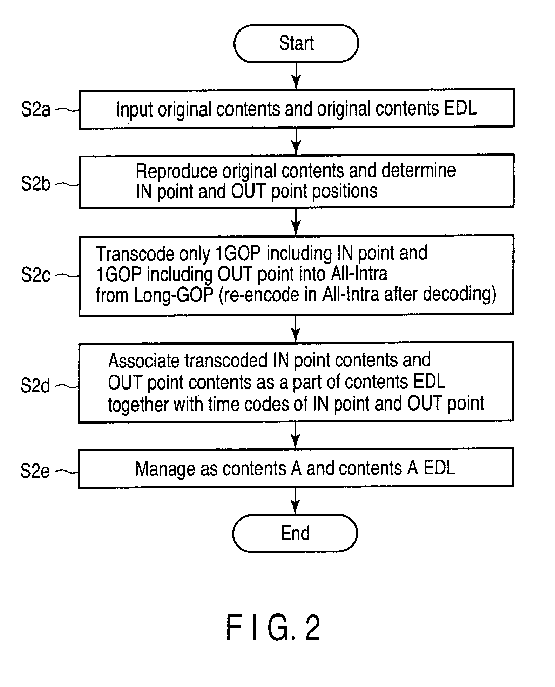

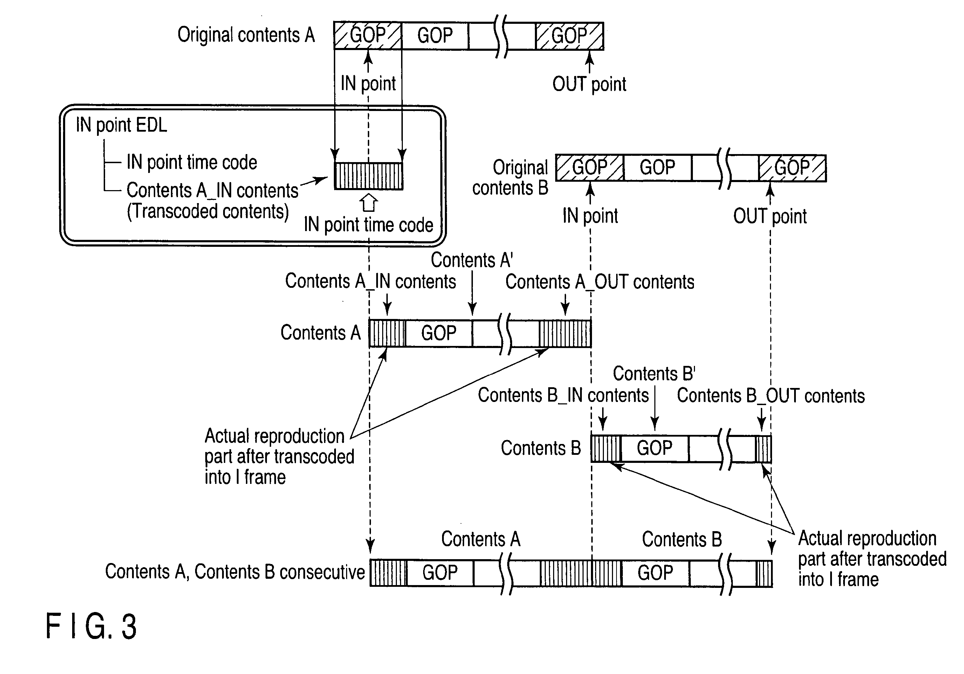

The operation of the video contents editing apparatus 1 configured in the above manner will be explained as follows. FIG. 2 is a flow chart which shows procedures carried out by the controller 30. FIG. 3 is a diagram which explains the operation of the apparatus 1.

In FIG. 2, the controller 30 receives input of original contents A, which are editing targets, and the EDL of the original contents A, and stores them in the storage unit 20 (step S2a). A user reproduces the original contents A and determines each position of the IN point and the OUT point by an operation display unit (not shown) of the apparatus 1 (step S2b). As shown in FIG. 3, the controller 30 converts only 1GOP including the IN point and 1GOP including the OUT point into All-Intra data from the long-GOP by the transcoder 10 (step S2c). In this manner, the All-Intra data (IN point contents) in which a GOP including an IN point is intra-coded, and the All-Intra data (OUT point contents) in which a GOP including an OUT point is intra-coded are generated. The controller 30 associates information indicating the IN point contents and the OUT point contents generated by the transcoder 10 together with time information (time code) of the IN point and the OUT point, as a part of the EDL (step S2d). The controller 30 manages the contents including the IN point contents and the OUT point contents (contents A in FIG. 1) together with the EDL (contents A EDL in FIG. 1) generated above (step S2e).

As shown in FIG. 3, actual reproduction contents in the case of consecutively reproducing contents A and contents B, are the following contents A and contents B which include the actual reproduction portion converted into All-Intra data. The contents A after being assigned the IN point and the OUT point are contents A_IN contents (All-Intra), contents A' (GOPs not including the IN point and the OUT point), and contents A_OUT contents (All-Intra). Further, the contents B after being assigned the IN point and the OUT point are contents B_IN contents (All-Intra), contents B' (GOPs not including the IN point and the OUT point), and contents B_OUT contents (All-Intra). In this manner, in the case of consecutive reproduction, reproduction of contents A and contents B can be realized by connecting the I frames by a single decoder.

Similarly, in the case of A/B insert editing, unified contents can be generated by copying (contents A_IN contents + contents A' + contents A_OUT contents) + (contents B_IN contents + contents B' + contents B_OUT contents) in another file.

Further, in the case of transferring contents which are assigned the IN point and the OUT point, transfer should be carried out by copying (contents A_IN contents + contents A' + contents A_OUT contents) in another file.

As mentioned above, in the above embodiment, in the video contents editing apparatus 1 which edits video contents subjected to inter-frame coding in units of GOP (Group of Pictures) at an arbitrary editing point, a GOP including the editing point is decoded into reproduction data by the decoder 11, and the reproduction data is encoded into intra coding data by the encoder 12. Editing information (EDL) including information indicating this intra coding data and the above mentioned editing point is generated, and the intra coding data and the generated EDL are associated to the above video contents and managed.

In other words, when processing the contents recorded in long-GOP to assign an IN point and an OUT point at an arbitrary frame, only 1GOP including the IN point and 1GOP including the OUT point are converted from the long-GOP into All-Intra and kept as a part of the editing information (EDL), as IN point contents and OUT point contents, with time information (time code) of the IN point and the OUT point.

Accordingly, according to the above mentioned embodiment, for example, upon consecutive reproduction, A/B insert editing, and transferring contents assigned with an IN point and an OUT point, by using the IN point contents and the OUT point contents in which the IN point and the OUT point of the contents are always transcoded into the I frame, reproduction, edit, and transfer can be made possible from the assigned I frame, thereby attempting to solve the conventional problems.

Further, in the above mentioned embodiment, since only each 1GOP including an IN point and an OUT point is transcoded, transcoding process can be performed in a short time. Further, since transcoding is not performed on the entire contents, there is an advantage in that there is hardly no age degeneration (only several frames before and after the IN point and the OUT point).

## Claims

1. A video contents editing apparatus (1) for editing video contents at an editing point on an arbitrary time, the video contents being inter-frame coded in units of GOP (Group of Pictures), **characterized by** comprising:
a decoder (11) to decode a GOP including the editing point into reproduction data;
an encoder (12) to encode the reproduction data into intra coding data;
a generation module (30) to generate editing information including information indicating the intra coding data and the editing point; and
a management module (30) to manage the intra coding data and the editing information by associating them with the video contents.

2. The apparatus (1) according to claim 1, **characterized in that**, when the editing point comprises a starting point and an ending point, the management module (30) manages video contents corresponding to GOPs between a GOP including the starting point and a GOP including the ending point by associating them with the intra coding data and the editing information.

3. A controller (30) operating in an apparatus (1) for editing video contents at an editing point on an arbitrary time, the video contents being inter-frame coded in units of GOP (Group of Pictures), performing actions of:
decoding a GOP including the editing point into reproduction data by a decoder;
encoding the reproduction data into intra coding data by an encoder;
generating editing information including information indicating the intra coding data and the editing point; and
managing the intra coding data and the editing information by associating them with the video contents.

4. The controller (30) according to claim 3, **characterized in that**, when the editing point comprises a starting point and an ending point, the managing manages video contents corresponding to GOPs between a GOP including the starting point and a GOP including the ending point by associating them with the intra coding data and the editing information.

5. A method used in an apparatus for editing video contents at an editing point on an arbitrary time, the video contents being inter-frame coded in units of GOP (Group of Pictures), **characterized by** comprising:
decoding a GOP including the editing point into reproduction data;
encoding the reproduction data into intra coding data;
generating editing information including information indicating the intra coding data and the editing point; and
managing the intra coding data and the editing information by associating them with the video contents.

6. The method according to claim 5, **characterized in that**, when the editing point comprises a starting point and an ending point, the managing includes managing video contents corresponding to GOPs between a GOP including the starting point and a GOP including the ending point by associating them with the intra coding data and the editing information.
